# DEMANDE DE BREVET EUROPEEN

(11) **EP 3 756 741 A1**
(43) Date de publication de la demande: **30.12.2020**
(21) Numéro de dépôt: 19305871.6
(22) Date de dépôt: 28.06.2019
(51) Int. Cl.: A63F 13/22, A63F 13/24, A63F 13/42

(54) **PROCEDE DE CONTRÔLE D'UN ELEMENT D'AFFICHAGE PAR UNE UNITE DE TRAITEMENT NUMERIQUE**

(71) Demandeur: Bigben Interactive SA, 59814 Lesquin Cedex (FR)
(72) Inventeur: FALC, Alain, 59814 Lesquin Cedex (FR); ALLAERT, Yannick, 59814 Lesquin Cedex (FR); DUDOYER, Stephen, 59814 Lesquin Cedex (FR)
(74) Mandataire: Vigand, Philippe

(57) **Abrégé**

Procédé de contrôle d'une position et/ou d'un déplacement d'un élément d'affichage au moyen d'un dispositif d'actionnement de jeu équipé d'au moins un élément de commande de direction, le procédé comprenant les étapes consistant à détecter une position de l'élément de commande ; envoyer une valeur de déplacement conformément à une échelle initiale en fonction du déplacement effectué ; détecter une position de maintien de l'élément de commande dans une zone morte dynamique autour de la position détectée ; détecter une position de reprise lorsque la position détectée de l'élément de commande est située hors de la zone morte dynamique ; effectuer une remise à l'échelle dynamique des valeurs de déplacement en fonction du déplacement de l'élément de commande ; et envoyer une valeur de déplacement conformément à l'échelle dynamique en fonction du déplacement effectué entre la position de reprise et la position de maintien.

## Description

La présente invention concerne de manière générale un procédé de contrôle d'un élément d'affichage généré sur un écran d'affichage par une unité de traitement numérique, comme une console de jeux vidéos ou un ordinateur, accouplée à un dispositif d'actionnement de jeu ou contrôleur de jeux. En particulier, l'invention concerne le contrôle de l'élément d'affichage lorsque le dispositif d'actionnement de jeu est équipé d'au moins un élément de commande de direction, comme par exemple une manette de jeu munie d'un ou plusieurs sticks directionnels ou encore un joystick ou une manette de type manche à balai, déplacé par un utilisateur pour commander la position et/ou le déplacement de l'élément d'affichage qui peut être un curseur de visée ou une scène vue par un avatar de l'utilisateur, depuis une position dans le jeu ou un poste de pilotage par exemple. L'invention concerne également le dispositif d'actionnement de jeu résultant.

Dans la suite de la présente description, on utilisera les expressions « position de repos » et « zone morte statique » en lien avec l'élément de commande de direction, à savoir notamment un levier de joystick ou un stick de manette de jeu. On entend par « position de repos », la position prise par l'élément de commande de direction lorsqu'il n'est pas actionné par l'utilisateur. On entend par zone morte statique, une zone définie autour de la position de repos, dans laquelle les déplacements de l'élément de commande de direction pourront ne pas être pris en considération.

De la même manière, on utilisera les expressions « position de maintien» pour définir une position, autre qu'une position de butée ou la position de repos, dans laquelle l'utilisateur maintient le joystick et « zone morte dynamique » pour définir une zone morte, décalée par rapport à la zone morte statique et définie de manière dynamique autour d'une position de maintien.

De manière générale, il est connu qu'un élément de commande de direction tel un joystick ou stick est un composant électronique capable de détecter des mouvements de déplacement suivant deux axes (X et Y). Dès que le joystick est incliné au-delà de sa zone morte statique, il envoie des données non nulles (par exemple entre -100 et +100) au dispositif d'actionnement de jeu qu'il équipe, à savoir plus précisément au microcontrôleur de la manette de jeu (qui, après traitement des données récupérées les envoie à la console de jeux) et ce même s'il est maintenu dans sa position. Son comportement diffère donc de celui d'une souris qui cesse d'envoyer des données à l'ordinateur lorsqu'elle est maintenue dans une position « d'arrêt » après un déplacement. Ainsi dans le cas d'un joystick, le seul moyen d'arrêter le mouvement à l'écran est de le faire revenir dans sa position de repos ou à l'intérieur de sa zone morte statique.

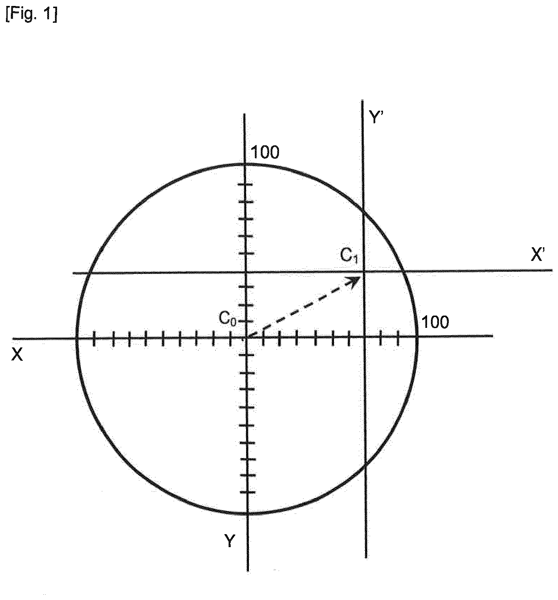

Afin d'éviter ce type de limitation liée à l'utilisation d'un tel joystick ou stick, il est connu dans l'art antérieur, en particulier du document WO 2017/137526, un procédé de contrôle d'un curseur de visée au moyen d'une manette de jeu. Plus précisément, comme cela est illustré en lien avec la figure 1, l'idée est de détecter que le joystick est maintenu dans une position, appelée position de maintien (C₁) pour déclencher l'activation d'une zone morte dynamique. Dès lors, les données envoyées par le joystick à l'unité de traitement numérique (via un microcontrôleur) deviennent nulles et la position centrale du repère, initialement correspondant à la position de repos (C₀) du joystick, est décalée afin de la faire coïncider avec la position de maintien (C₁) où le joystick s'est arrêté et qui a déclenché l'activation de la zone morte dynamique (ZMD). Il est alors nécessaire de projeter toutes les données d'entrée (suivant les axes X et Y et dans toutes les directions possibles) dans ce nouveau repère (X', Y'). Ainsi, lorsque le joystick quitte sa position de maintien les données envoyées sont « redimensionnées » de sorte que le déplacement à l'écran du curseur de visée reprenne sans saut ni accélération brutale.

Cependant une telle gestion des déplacements en sortie de la zone morte dynamique présente néanmoins certains inconvénients. Cette méthode consistant à soustraire des données d'entrée les coordonnées du nouveau centre (C₁) correspondant à la position de maintien détectée, ne permet de couvrir qu'une faible portion de la plage initiale de valeurs du joystick (-100, +100) dans de nombreuses directions, tandis que la valeur extrémale sur l'un et/ou l'autre des deux axes sera atteinte bien avant d'avoir atteint la butée physique du joystick sur la manette.

Un but de la présente invention est de répondre aux inconvénients de l'art antérieur mentionnés ci-dessus et en particulier, tout d'abord, de fournir un procédé de contrôle d'une position et/ou d'un déplacement d'un élément d'affichage généré sur un écran par une unité de traitement numérique accouplée à un dispositif d'actionnement de jeu capable de gérer efficacement les déplacements en sortie de zone morte dynamique et de réduire les plages de valeurs non utilisées.

Pour cela un premier aspect de l'invention concerne un procédé de contrôle d'une position et/ou d'un déplacement d'un élément d'affichage généré sur un écran par une unité de traitement numérique accouplée à un dispositif d'actionnement de jeu équipé d'au moins un élément de commande de direction agencé pour être déplacé selon au moins deux axes de liberté autour d'une position de repos dans une zone de déplacement limitée par butée définissant une échelle initiale de valeurs de déplacement entre une valeur nulle pour la position de repos et une valeur extrémale pour une position en butée selon chaque axe de liberté, le procédé comprenant les étapes consistant à :
- détecter une position de l'élément de commande de direction dans la zone de déplacement ;
- envoyer une valeur de déplacement selon chaque axe de liberté conformément à l'échelle initiale en fonction du déplacement effectué entre la position détectée et la position de repos ;
- détecter une position de maintien de l'élément de commande de direction dans une zone morte dynamique correspondant à un déplacement prédéterminé autour de la position détectée ;
- détecter une position de reprise lorsque la position détectée de l'élément de commande de direction est située hors de la zone morte dynamique autour de la position de maintien ;
- effectuer une remise à l'échelle consistant à définir une échelle dynamique de valeurs de déplacement entre une valeur nulle pour la position de maintien détectée et une valeur extrémale pour au moins une position en butée définie par rapport à un déplacement de l'élément de commande ;
- envoyer une valeur de déplacement selon chaque axe de liberté conformément à l'échelle dynamique en fonction du déplacement effectué entre la position de reprise et la position de maintien.

Un tel procédé de contrôle permet grâce à la définition d'une échelle dynamique, dont la valeur extrémale pour au moins une position en butée est définie par rapport à un déplacement de l'élément de commande, d'assurer une plage de valeurs améliorée tout en gardant une stabilité de l'élément d'affichage lors de la sortie de la zone morte dynamique autour de la position de maintien. Ce type de procédé est particulièrement adapté pour des jeux de tir nécessitant un suivi d'une cible mobile avec ajustement possible de la mire.

Selon un premier mode de mise en oeuvre, l'étape de remise à l'échelle est effectuée lorsqu'une position de maintien et une position de reprise subséquente ont été détectées et elle comprend une étape préliminaire consistant à définir le sens de déplacement depuis la position de maintien détectée vers la position de reprise, suivi de l'étape consistant à définir l'échelle dynamique de valeurs de déplacement pour laquelle une valeur maximale est attribuée à la position en butée suivant le sens de déplacement défini.

Avantageusement, l'échelle dynamique est définie par un rayon d'un cercle décalé entre la position de maintien détectée et la position en butée suivant le sens de déplacement défini passant par la position de reprise et par un nouveau repère le long des diamètres du cercle décalé, parallèles aux axes de liberté, et pour lequel l'étape d'envoi de valeurs de déplacement conformément à l'échelle dynamique comprend une étape préliminaire consistant à obtenir les valeurs de déplacement par projection de la position de reprise sur le nouveau repère défini.

L'avantage de ce premier mode de mise en oeuvre réside dans le fait que l'échelle dynamique des valeurs est automatiquement effectuée à chaque nouveau déplacement entrainant une sortie de la zone morte d'une position de maintien, ce qui permet d'assurer que les valeurs minimales et maximales puissent être atteintes dans toutes les directions quelle que soit la position de maintien considérée. Une telle mise en oeuvre ne nécessite pas une grande puissance de calcul et peut donc aisément être implémentée dans un dispositif d'actionnement de jeu avec ou sans fil permettant de s'affranchir de l'utilisation du calculateur de l'unité de traitement numérique.

En outre en fonction de la séquence de déplacement de l'élément de commande de direction entre les positions de maintien et de reprise, cela entraine une sensibilité différente de l'échelle dynamique de valeurs au cours du temps fournissant une jouabilité adaptative. En particulier, la détection d'une séquence répétée de déplacement de l'élément de commande de direction dans un même sens autour de la position de maintien permet de détecter un déplacement circulaire. La détection d'un tel déplacement peut être utilisé pour effectuer une commande d'affichage particulière de l'élément d'affichage, comme par exemple le faire pivoter sur lui-même.

Selon un deuxième mode de mise en oeuvre, l'étape de remise à l'échelle est effectuée lorsqu'une position de maintien a été détectée et elle comprend une étape préliminaire consistant à définir la direction de déplacement entre la position de repos et la position de maintien détectée, suivi de l'étape consistant à définir l'échelle dynamique de valeurs pour laquelle une valeur maximale est attribuée à la position en butée opposée à la position de maintien par rapport à la position de repos selon la direction de déplacement défini.

Avantageusement, l'échelle dynamique est définie par un rayon d'un cercle décalé entre la position de maintien détectée et la position en butée opposée à la position de maintien par rapport à la position de repos selon la direction de déplacement défini et par un nouveau repère le long des diamètres du cercle décalé, parallèles aux axes de liberté, et pour lequel l'étape d'envoi de valeurs de déplacement conformément à l'échelle dynamique comprend une étape préliminaire consistant à obtenir les valeurs de déplacement par projection de la position de reprise sur le nouveau repère défini.

Ce deuxième mode de mise en oeuvre est particulièrement adapté pour des jeux nécessitant des mouvements de va-et-vient de l'élément de commande de direction. En effet dans l'axe du mouvement, il reste possible d'atteindre la valeur minimale ou maximale. Un tel mode permet également d'assurer une progression de la vitesse de déplacement de l'élément d'affichage à l'écran semblable quelle que soit la distance entre la position de maintien détectée et la position en butée opposée à la position de maintien par rapport à la position de repos selon la direction de déplacement défini car l'échelle dynamique des valeurs est constante dans toutes les directions. En outre, une telle mise en oeuvre ne nécessite pas une grande puissance de calcul et peut donc aisément être implémentée dans un dispositif d'actionnement de jeu avec ou sans fil permettant de s'affranchir de l'utilisation du calculateur de l'unité de traitement numérique.

Selon un troisième mode de mise en oeuvre, l'étape de remise à l'échelle est effectuée lorsqu'une position de maintien a été détectée et en ce que, lors de la définition de l'échelle dynamique de valeurs, une valeur extrémale est attribuée aux positions en butée correspondant à une projection de la position de maintien selon chaque axe de liberté et dans chaque direction.

Selon l'un quelconque des modes de mise en oeuvre, avantageusement, une zone morte statique est définie autour de la position de repos et dans laquelle les déplacements de l'élément de commande de direction ne sont pas pris en considération.

Selon un deuxième aspect de l'invention, le procédé comprend en outre une étape d'affichage de la position et/ou du déplacement de l'élément d'affichage sur l'écran par l'unité de traitement numérique sur la base des valeurs de déplacement conformément à l'échelle initiale et/ou à l'échelle dynamique reçues du dispositif d'actionnement de jeu.

Un dernier aspect de l'invention concerne un dispositif d'actionnement de jeu comprenant :
- au moins un élément de commande de direction agencé pour être déplacé selon au moins deux axes de liberté autour d'une position de repos dans une zone de déplacement limitée par butée ;
- au moins un capteur de position agencé pour détecter une position de l'élément de commande de direction dans la zone de déplacement ;
- des moyens de traitement numérique des positions détectés ;
- des moyens de communication avec une unité de traitement numérique pour transmettre des valeurs de déplacement ;
agencés pour la mise en oeuvre du procédé de contrôle selon l'un des précédents aspects.

D'autres caractéristiques et avantages de la présente invention apparaîtront plus clairement à la lecture de la description détaillée qui suit de modes de mise en oeuvre de l'invention donnés à titre d'exemple nullement limitatifs et illustrés par les dessins annexés, dans lesquels :
- la figure 1, déjà décrite, représente schématiquement la zone de déplacement d'un joystick avec changement d'échelle selon l'art antérieur ;
- la figure 2 représente, sous forme de schéma bloc, un procédé de contrôle de la position et/ou du déplacement d'un élément d'affichage selon un mode de mise en oeuvre de l'invention ;
- la figure 3 représente schématiquement la zone de déplacement d'un joystick avec un changement d'échelle dynamique selon un premier mode de mise en oeuvre de l'invention ;
- la figure 4 représente schématiquement la zone de déplacement d'un joystick avec un changement d'échelle dynamique selon un deuxième mode de mise en oeuvre de l'invention ;
- la figure 5 représente schématiquement la zone de déplacement d'un joystick avec un changement d'échelle dynamique selon un troisième mode de mise en oeuvre de l'invention ;
- la figure 6 représente schématiquement un joystick/stick selon un mode de réalisation selon le troisième aspect de l'invention.

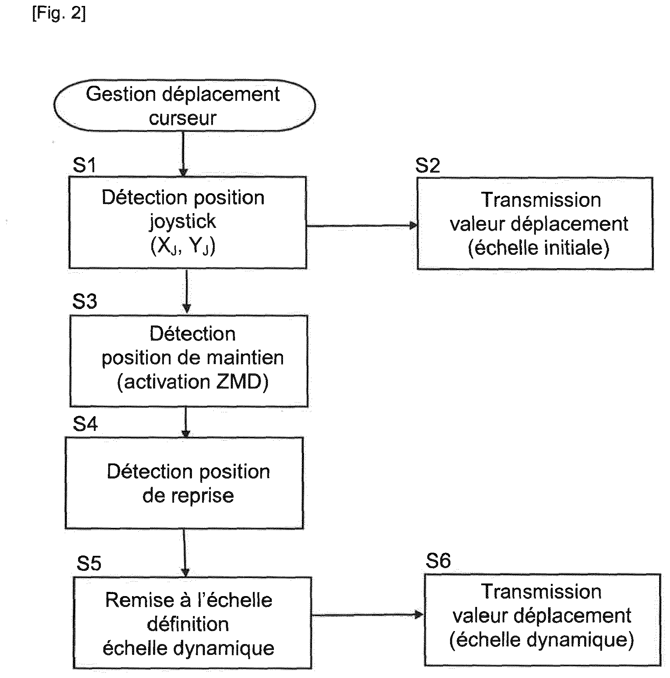

La figure 2 représente, sous forme de schéma bloc, un procédé de contrôle d'une position et/ou d'un déplacement d'un élément d'affichage, comme par exemple un curseur d'écran, commandée via une unité de traitement numérique par un dispositif d'actionnement de jeu équipé d'au moins un élément de commande de direction.

L'élément de commande de direction est agencé pour être déplacé selon au moins deux axes de liberté (X, Y) autour d'une position de repos (X₀, Y₀) dans une zone de déplacement limitée par butée, comme par exemple une butée circulaire, définissant une échelle initiale de valeurs de déplacement entre une valeur nulle pour la position de repos et une valeur extrémale pour une position en butée selon chaque axe de liberté.

Le procédé comprend les étapes consistant à :
S1 : détecter une position (X_{J}, Y_{J}) de l'élément de commande de direction dans la zone de déplacement ;
S2 : envoyer une valeur de déplacement conformément à une échelle initiale en fonction du déplacement effectué entre la positon détectée et une position de repos de l'élément de commande de direction ;
S3 : détecter une position de maintien de l'élément de commande de direction à l'intérieur d'une zone morte dynamique correspondant à un déplacement prédéterminé autour de la position détectée ;
S4 : détecter une position de reprise lorsque la position détectée de l'élément de commande de direction est située hors de la zone morte dynamique de la position de maintien ;
S5 : effectuer une remise à l'échelle consistant à définir une échelle dynamique de valeurs de déplacement entre une valeur nulle pour la position de maintien détectée et une valeur extrémale pour au moins une position en butée définie par rapport à un déplacement de l'élément de commande ; et
S6 : envoyer une valeur de déplacement selon chaque axe de liberté conformément à l'échelle dynamique en fonction du déplacement effectué entre la position de reprise et la position de maintien.

Avec la description des figures suivantes, il sera présenté des modes de mise en oeuvre du procédé selon l'invention et plus particulièrement des étapes S5 de remise à l'échelle et S6 de transmission des valeurs de déplacement conformément à l'échelle dynamique définie à l'étape précédente. Pour des raisons de simplicité, il sera fait référence dans la suite de la description à un joystick pour désigner l'élément de commande de direction.

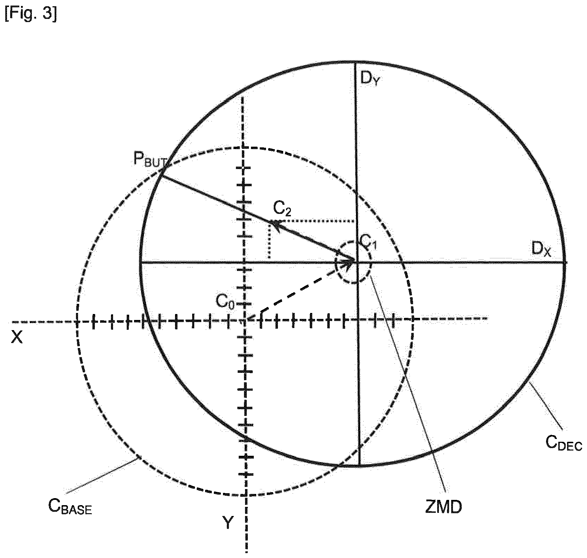

La figure 3 représente schématiquement la zone de déplacement d'un joystick avec un changement d'échelle dynamique selon un premier mode de mise en oeuvre de l'invention.

Comme sur la figure 1, on retrouve sur la figure 3, un repère initial sous la forme d'un cercle de base (C_{BASE}) autour de la position de repos (C₀) délimitant la zone de déplacement du joystick ayant une butée circulaire. On pourrait bien entendu utiliser d'autres types de butée. Une échelle initiale de valeurs de déplacement est définie le long des axes X et Y de déplacement du joystick.

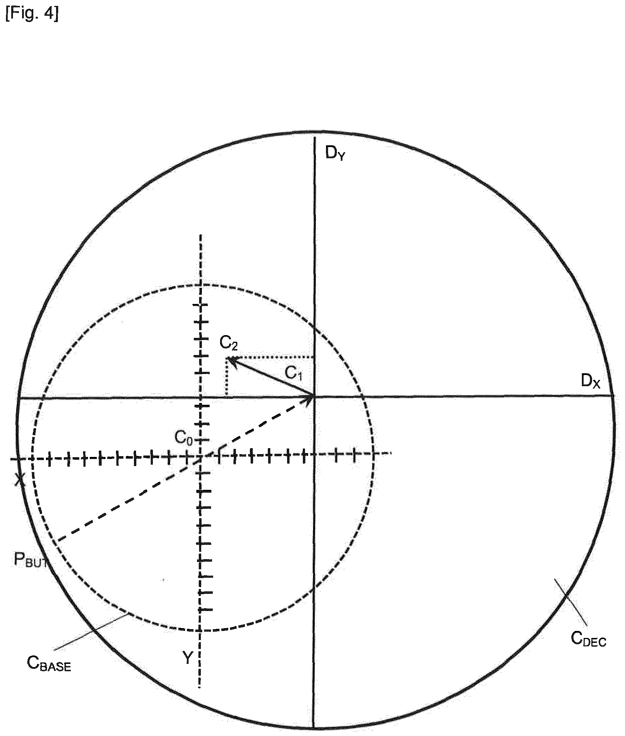

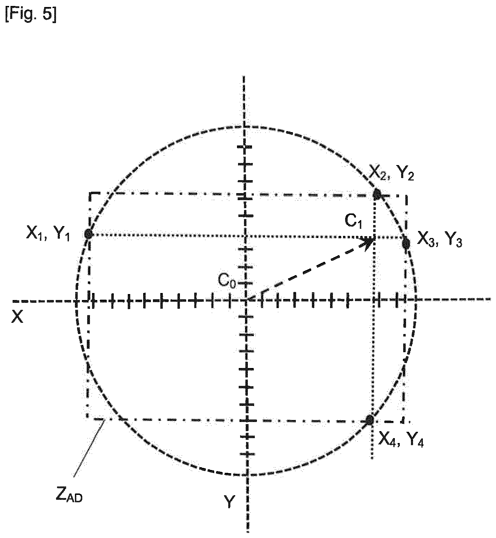

Sur l'exemple représenté à la figure 3, le joystick a été déplacé depuis la position de repos C₀ vers une position de maintien C₁. Une telle position de maintien C1 peut-être détectée conformément à l'une des méthodes décrites dans le document WO 2017/137526, et en particulier celle basée sur la détection de la vitesse de déplacement du joystick. Lors de la détection d'une position de maintien, une zone morte dynamique (ZMD) est activée. Bien qu'une telle ZMD ne soit pas à nouveau représentée sur les figures 4 et 5, il va de soi qu'elle peut être également comprise.

Le joystick est ensuite à nouveau déplacé depuis la position de maintien C₁ vers une position dite de reprise C₂ se trouvant au-delà de la zone morte dynamique entourant la position de maintien. Lors de la détection d'une telle position de reprise, il est procédé à une remise à l'échelle de l'échelle initiale en définissant une nouvelle échelle dynamique.

Cette étape de remise à l'échelle est effectuée lorsqu'une position de maintien et une position de reprise subséquente ont été détectées, comme dans notre exemple avec les positions C₁ et C₂. Cette remise à l'échelle comprend une étape préliminaire consistant à définir le sens de déplacement depuis la position de maintien détectée vers la position de reprise, suivi de l'étape consistant à définir l'échelle dynamique de valeurs de déplacement pour laquelle la valeur maximale est attribuée à la position en butée C_{BUT} suivant le sens de déplacement défini.

L'échelle dynamique est définie par
- un rayon d'un cercle décalé C_{DEC} entre la position de maintien détectée et la position en butée P_{BUT} suivant le sens de déplacement défini passant par la position de reprise C₂ ; et
- un nouveau repère le long des diamètres D_{X} et D_{Y} du cercle décalé C_{DEC}, parallèles aux axes X et Y.

L'étape d'envoi de valeurs de déplacement conformément à l'échelle dynamique comprend une étape préliminaire consistant à obtenir les valeurs de déplacement par projection de la position de reprise sur le nouveau repère ainsi défini.

Dans ce premier mode, le rayon qui sert à définir la nouvelle échelle dynamique est recalculé de préférence à chaque nouveau déplacement du joystick. Par conséquent, la remise à l'échelle est réitérée à chaque nouvelle donnée d'entrée.

La figure 4 représente schématiquement la zone de déplacement d'un joystick avec un changement d'échelle dynamique selon un deuxième mode de mise en oeuvre de l'invention.

Comme sur la figure 1, on retrouve sur la figure 4, un repère initial sous la forme d'un cercle de base (C_{BASE}) autour de la position de repos (C₀). L'échelle initiale de valeurs de déplacement est définie le long des axes X et Y. Le joystick a été déplacé depuis la position de repos C₀ vers une position de maintien C₁ puis vers une position de reprise C₂.

L'étape de remise à l'échelle est effectuée lorsqu'une position de maintien C₁ est détectée. Cette étape comprend une étape préliminaire consistant à définir la direction de déplacement entre la position de repos et la position de maintien détectée, c'est-à-dire l'axe passant par C₀ et C₁, suivi d'une étape consistant à définir l'échelle dynamique de valeurs pour laquelle la valeur maximale est attribuée à la position en butée (P_{BUT}) opposée à la position de maintien par rapport à la position de repos selon la direction de déplacement défini. Cette position de butée P_{BUT} correspond au plus grand rayon entre la position de maintien C₁, considérée comme nouveau centre, et le cercle de base G_{BASE}. Le rayon C₁-P_{BUT} permet de définir un cercle décalé C_{DEC} centré autour de la position de maintien et passant par P_{BUT}.

L'échelle dynamique est définie par
- le rayon du cercle décalé C_{DEC}; et
- un nouveau repère le long des diamètres D_{X} et D_{Y} du cercle décalé C_{DEC}, parallèles aux axes X et Y.

L'étape d'envoi de valeurs de déplacement conformément à l'échelle dynamique comprend une étape préliminaire consistant à obtenir les valeurs de déplacement par projection de la position de reprise sur le nouveau repère ainsi défini.

La figure 5 représente schématiquement la zone de déplacement d'un joystick avec un changement d'échelle dynamique selon un troisième mode de mise en oeuvre de l'invention.

L'étape de remise à l'échelle est effectuée lorsqu'une position de maintien a été détectée. Elle consiste à mettre des limites sur chacun des axes de manière à ce chaque point d'intersection entre un des axes dans chaque direction et le cercle de base (couples (Xi, Yi) sur la figure 5) corresponde à une valeur extrémale (minimale ou maximale). Cela revient à dessiner un rectangle fictif qui délimite la distribution des valeurs, c'est-à-dire la zone active de déplacement (Z_{AD}).

Ainsi, lors de la définition de l'échelle dynamique de valeurs, les valeurs extrémales sont attribuées aux positions en butée correspondant à une projection de la position de maintien, de sorte qu'on est assuré d'atteindre les valeurs minimales et maximales selon les directions cardinales.

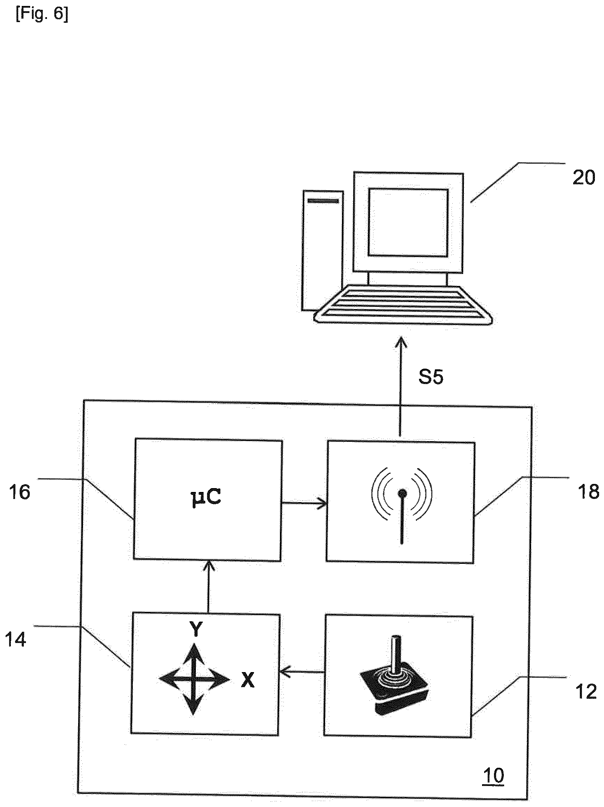

La figure 6 représente schématiquement un joystick 10 selon un mode de réalisation de l'invention. Cela s'applique de la même manière à une manette de jeu munie d'un stick.

Le joystick comprend un levier 12 agencé pour occuper une position de repos et se déplacer selon deux axes X-Y et présentant une zone morte définie autour de la position de repos. Un capteur de position 14 est agencé pour détecter la position du levier 12 suivant les deux axes X-Y. Des moyens de traitement, comme par exemple un microcontrôleur 16, sont agencés pour déterminer les valeurs de déplacement du levier basées sur les positions successives détectées. Des moyens de communication 18 sont agencés pour transmettre des données de position et de vitesse à une unité de traitement numérique externe, comme par exemple un ordinateur personnel 20 ou une console de jeux.

Plus particulièrement, les moyens de traitement (16) et les moyens de communication (18) sont agencés pour la mise en oeuvre du procédé de contrôle d'une position et/ou d'un déplacement d'un élément d'affichage généré sur un écran par une unité de traitement numérique (20) selon l'un quelconque des modes de mise en oeuvre présentés ci-dessus.

On comprendra que diverses modifications et/ou améliorations évidentes pour l'homme du métier peuvent être apportées aux différents modes de mise en oeuvre de l'invention décrits dans la présente description sans sortir du cadre de l'invention défini par les revendications annexées.

En particulier, toutes les variantes de gestion de la zone morte dynamique décalée telle que présentées dans le document WO 2017/137526 pourront être intégrées aux différents modes de mise en oeuvre exposés ci-avant.

## Revendications

1. Procédé de contrôle d'une position et/ou d'un déplacement d'un élément d'affichage généré sur un écran par une unité de traitement numérique accouplée à un dispositif d'actionnement de jeu (10) équipé d'au moins un élément de commande de direction (12) agencé pour être déplacé selon au moins deux axes de liberté (X, Y) autour d'une position de repos (X₀, Y₀) dans une zone de déplacement limitée par butée définissant une échelle initiale de valeurs de déplacement entre une valeur nulle pour la position de repos et une valeur extrémale pour une position en butée selon chaque axe de liberté, le procédé comprenant les étapes consistant à :
- détecter une position (X_{J}, Y_{J}) de l'élément de commande de direction dans la zone de déplacement ;
- envoyer une valeur de déplacement selon chaque axe de liberté conformément à l'échelle initiale en fonction du déplacement effectué entre la positon détectée et la position de repos ;
- détecter une position de maintien de l'élément de commande de direction dans une zone morte dynamique correspondant à un déplacement prédéterminé autour de la position détectée ;
- détecter une position de reprise lorsque la position détectée de l'élément de commande de direction est située hors de la zone morte dynamique autour de la position de maintien ;
- effectuer une remise à l'échelle consistant à définir une échelle dynamique de valeurs de déplacement entre une valeur nulle pour la position de maintien détectée et une valeur extrémale pour au moins une position en butée définie par rapport à un déplacement de l'élément de commande ;
- envoyer une valeur de déplacement selon chaque axe de liberté conformément à l'échelle dynamique en fonction du déplacement effectué entre la position de reprise et la position de maintien.

2. Procédé de contrôle selon la revendication 1, pour lequel l'étape de remise à l'échelle est effectuée lorsqu'une position de maintien et une position de reprise subséquente ont été détectées et en ce qu'elle comprend une étape préliminaire consistant à définir le sens de déplacement depuis la position de maintien détectée vers la position de reprise, suivi de l'étape consistant à définir l'échelle dynamique de valeurs de déplacement pour laquelle une valeur maximale est attribuée à la position en butée suivant le sens de déplacement défini.

3. Procédé de contrôle selon la revendication 2, pour lequel l'échelle dynamique est définie par un rayon d'un cercle décalé C_{DEC} entre la position de maintien détectée et la position en butée P_{BUT} suivant le sens de déplacement défini passant par la position de reprise C₂ et par un nouveau repère le long des diamètres D_{X} et D_{Y} du cercle décalé C_{DEC}, parallèles aux axes de liberté X et Y, et pour lequel l'étape d'envoi de valeurs de déplacement conformément à l'échelle dynamique comprend une étape préliminaire consistant à obtenir les valeurs de déplacement par projection de la position de reprise sur le nouveau repère défini.

4. Procédé de contrôle selon la revendication 2 ou 3, pour lequel l'étape de remise à l'échelle est réitérée après chaque détection d'une position de maintien et d'une position de reprise subséquente.

5. Procédé de contrôle selon la revendication 1, pour lequel l'étape de remise à l'échelle est effectuée lorsqu'une position de maintien a été détectée et en ce qu'elle comprend une étape préliminaire consistant à définir la direction de déplacement entre la position de repos et la position de maintien détectée, suivi de l'étape consistant à définir l'échelle dynamique de valeurs pour laquelle une valeur maximale est attribuée à la position en butée (P_{BUT}) opposée à la position de maintien par rapport à la position de repos selon la direction de déplacement défini, la position de butée P_{BUT} correspondant au plus grand rayon entre la position de maintien, considérée comme nouveau centre, et le cercle de base C_{BASE}.

6. Procédé de contrôle selon la revendication 5, pour lequel l'échelle dynamique est définie par le rayon C₁-P_{BUT} définissant un cercle décalé C_{DEC} centré autour de la position de maintien et passant par la position de butée P_{BUT} et par un nouveau repère le long des diamètres D_{X} et D_{Y} du cercle décalé C_{DEC}, parallèles aux axes de liberté X et Y, et pour lequel l'étape d'envoi de valeurs de déplacement conformément à l'échelle dynamique comprend une étape préliminaire consistant à obtenir les valeurs de déplacement par projection de la position de reprise sur le nouveau repère défini.

7. Procédé de contrôle selon la revendication 1, pour lequel l'étape de remise à l'échelle est effectuée lorsqu'une position de maintien a été détectée et en ce que, lors de la définition de l'échelle dynamique de valeurs, une valeur extrémale est attribuée aux positions en butée correspondant à une projection de la position de maintien selon chaque axe de liberté et dans chaque direction.

8. Procédé de contrôle selon l'une quelconque des revendications précédentes, pour lequel une zone morte statique (ZMS) est définie autour de la position de repos (C₀) et dans laquelle les déplacements de l'élément de commande de direction ne sont pas pris en considération.

9. Procédé de contrôle selon l'une quelconque des revendications précédentes, comprenant en outre une étape d'affichage de la position et/ou du déplacement de l'élément d'affichage sur l'écran par l'unité de traitement numérique sur la base des valeurs de déplacement conformément à l'échelle initiale et/ou à l'échelle dynamique reçues du dispositif d'actionnement de jeu.

10. Dispositif d'actionnement de jeu comprenant :
- au moins un élément de commande de direction agencé pour être déplacé selon au moins deux axes de liberté (X, Y) autour d'une position de repos (X₀, Y₀) dans une zone de déplacement limitée par butée ;
- au moins un capteur de position agencé pour détecter une position de l'élément de commande de direction dans la zone de déplacement ;
- des moyens de traitement numérique des positions détectés ;
- des moyens de communication avec une unité de traitement numérique pour transmettre des valeurs de déplacement ;
agencés pour la mise en oeuvre du procédé de contrôle selon l'une des revendications 1 à 9.
